# FASCICULE DE BREVET EUROPEEN

(11) **EP 1 160 157 B1**
(45) Date de publication et mention de la délivrance du brevet: **08.06.2005**
(21) Numéro de dépôt: 01401243.9
(22) Date de dépôt: 15.05.2001
(51) Int. Cl.: B64C 13/18, B64C 13/50, G05D 1/10

(54) **Aéronef à commandes de vol électriques, pourvu d'un pilote automatique**
Flugzeug mit elektrischer Flugsteuerung, versehen mit einem Autopilotsystem
Fly-by-wire aircraft with autopilot

(30) Priorité: 29.05.2000 FR 0006828
(43) Date de publication de la demande: 05.12.2001
(73) Titulaire: AIRBUS FRANCE, 31060 Toulouse (FR)
(72) Inventeur: Kubica, François, 31100 Toulouse (FR)
(74) Mandataire: Bonnetat, Christian

(56) Documents cités:
- EP-A- 0 573 106
- US-A- 5 197 697

## Description

La présente invention concerne les aéronefs à commandes de vol électriques et, plus particulièrement, l'architecture du système de commande de vol pour de tels aéronefs.

On sait qu'un aéronef à commandes de vol électriques comporte des organes de pilotage, tels que manches, minimanches, palonniers, etc ... équipés de transducteurs électriques, de sorte qu'ils engendrent des consignes électriques de pilotage représentatives de l'action qu'un pilote exerce sur eux. Il comporte également un calculateur de commandes de vol qui élabore, à partir desdites consignes électriques de pilotage engendrées par lesdits organes de pilotage et de paramètres de pilotage provenant par exemple de capteurs, des ordres de commandes électriques que ledit calculateur de commandes de vol applique à des actionneurs chargés du déplacement des gouvernes de l'aéronef.

Il est par ailleurs usuel qu'un tel aéronef comporte un pilote automatique, apte en certaines circonstances à piloter ledit aéronef à la place du pilote. De façon également connue, un pilote automatique est essentiellement constitué d'un calculateur de navigation et d'un calculateur de pilotage. Le calculateur de navigation reçoit des consignes de guidage (qui lui ont été indiquées par le pilote) et des paramètres de guidage (qui lui sont adressés par des capteurs ou une centrale inertielle, par exemple) et, à partir de ces consignes et paramètres de guidage, il élabore des consignes de pilotage automatique. Quant à lui, le calculateur de pilotage transforme ces consignes de pilotage automatique en ordres de commande de pilote automatique, qu'il applique auxdits actionneurs des gouvernes de l'aéronef.

Suivant les modes de réalisation connus de pilote automatique, lesdits ordres de commande de pilote automatique sont appliqués auxdits actionneurs, soit directement, soit par l'intermédiaire dudit calculateur de commandes de vol. Dans ce dernier cas, on notera que ledit calculateur de commandes de vol reçoit, du pilote automatique, lesdits ordres de commande de pilote automatique déjà complètement élaborés et que, en conséquence, son rôle se résume à une simple transmission, sans modification, desdits ordres de commande de pilote automatique.

Quel que soit celui de ces deux modes de réalisation qui se trouve à bord de l'aéronef, on doit cependant remarquer que, dans une telle architecture connue, il est nécessaire de prévoir deux fonctions de pilotage, à savoir l'une pour le calculateur de commandes de vol et l'autre pour le pilote automatique. Outre le fait que cela entraîne des coûts importants, il peut se faire que, à cause des contraintes du système, lesdites fonctions de pilotage soient différentes, notamment en ce qui concerne la puissance de calcul, l'acquisition des paramètres, les surveillances, etc ... Il est donc obligatoire de développer et de valider deux fonctions de pilotage. De plus, une telle structure ne permet pas de minimiser les délais entre les informations inertielles et les ordres de commande donnés par le pilote automatique aux gouvernes.

La présente invention a pour objet de remédier à ces inconvénients.

A cette fin, selon l'invention, l'aéronef à commandes de vol électriques, pourvu de gouvernes aptes à être déplacées par des actionneurs commandés électriquement, ledit aéronef comportant :
- des organes de pilotage et un calculateur de commandes de vol, lesdits organes de pilotage étant actionnés par un pilote et engendrant des consignes électriques de pilotage, qui sont adressées audit calculateur de commandes de vol, ce dernier calculateur engendrant, à partir desdites consignes électriques de pilotage et de paramètres de pilotage, des ordres de commande adressés auxdits actionneurs pour le déplacement desdites gouvernes ; et
- un pilote automatique,
   est remarquable :
   ■ en ce que ledit pilote automatique exerce exclusivement une fonction de navigation et n'est constitué que par des moyens de calcul élaborant des consignes de pilotage automatique à partir des consignes de guidage et de paramètres de guidage qui lui sont adressées ;
   ■ en ce que lesdits moyens de calcul sont directement reliés audit calculateur de commandes de vol pour adresser à ce dernier lesdites consignes de pilotage automatique ; et
   ■ en ce que ledit calculateur de commandes de vol élabore, à partir desdites consignes de pilotage automatique, lesdits ordres de commande de pilote automatique et adresse ces derniers ordres auxdits actionneurs pour qu'ils déplacent en conséquence lesdites gouvernes.

Ainsi, conformément à la présente invention, le calculateur de pilotage dudit pilote automatique est supprimé et c'est le calculateur de commandes de vol qui assure la fonction pilotage du pilote automatique. L'invention permet donc de ne développer et valider qu'une seule fonction de pilotage, cette dernière étant implantée dans ledit calculateur de commandes de vol. Elle permet en plus de minimiser les retards entre les informations inertielles et les ordres commandés aux gouvernes par le pilote automatique. Par ailleurs, elle offre également la possibilité d'homogénéiser les réponses de l'aéronef en pilotage manuel et en pilotage automatique.

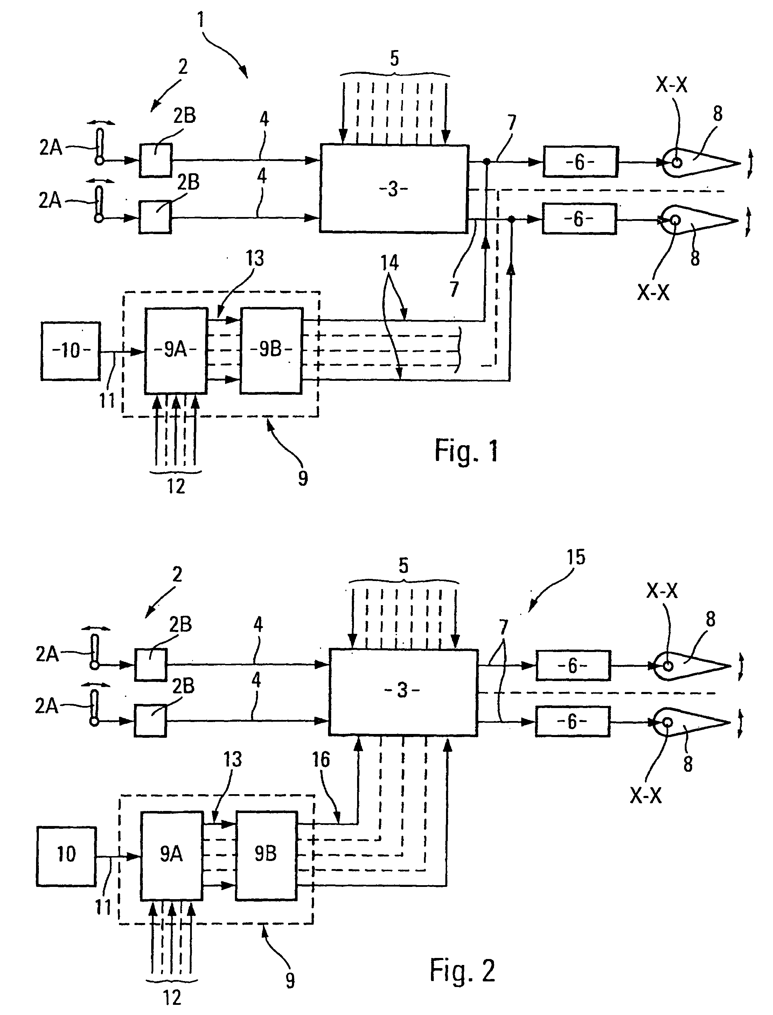

On remarquera que le document US-A-5 197 697 décrit un système de commandes de vol électriques avec possibilité de surpassement manuel. Ce document ne fait pas mention de la structure duale (navigation et pilotage) d'un pilote automatique et, au contraire, considère un pilote automatique comme un tout, c'est-à-dire que, pour ce document antérieur, un pilote automatique comporte un calculateur de navigation et un calculateur de pilotage. De plus, il y est prévu des moyens pour comparer les ordres de commandes électriques en provenance des organes de pilotage aux ordres de commande du pilote automatique et des moyens pour ajuster ces derniers en fonction des différences détectées. Cette particularité confirme donc que le dispositif de ce document antérieur incorpore un pilote automatique complet, assurant à la fois la fonction navigation et la fonction pilotage. Ce dispositif correspond donc à la technique antérieure illustrée par la figure 1 décrite ci-après.

Par ailleurs, le système de commandes de vol électriques décrit par le document EP-A1-0573106 comporte un calculateur de pilotage placé en parallèle sur un calculateur de navigation et en amont des calculateurs de commandes de vol.

De préférence, dans l'aéronef conforme à la présente invention, afin de simplifier au maximum la structure dudit calculateur de commandes de vol, lesdites consignes électriques de pilotage provenant desdits organes de pilotage et lesdites consignes de pilotage automatique provenant desdits moyens de calcul du pilote automatique sont deux à deux de même nature. Par exemple :
- lesdits moyens de calcul du pilote automatique élaborent, à partir desdites consignes de guidage et desdits paramètres de guidage, trois consignes de pilotage automatique correspondant respectivement à un facteur de charge vertical commandé, à une vitesse de roulis commandée et à un dérapage commandé ; et
- lesdits organes de pilotage engendrent trois consignes électriques de pilotage, respectivement homogènes à un facteur de charge vertical commandé, à une vitesse de roulis commandée et à un dérapage commandé.

Les figures du dessin annexé feront bien comprendre comment l'invention peut être réalisée. Sur ces figures, des références identiques désignent des éléments semblables.
Les figures 1 et 2 illustrent schématiquement deux architectures connues pour un système de vol électrique d'aéronef.
La figure 3 illustre schématiquement l'architecture de système de vol électrique conforme à la présente invention.

L'architecture connue 1 de système de vol électrique pour aéronef (non représenté) comprend essentiellement :
- des organes de pilotage 2, comprenant des éléments 2A, tels que minimanches, palonniers, etc ..., destinés à être actionnés par un pilote (non représenté) et associés à des transducteurs 2B, engendrant des consignes électriques de pilotage représentatives des déplacements desdits éléments 2A ;
- un calculateur de commandes de vol 3, qui reçoit, de façon usuelle, par des liaisons 4 lesdites consignes électriques de pilotage engendrées par les organes de pilotage 2, et par des liaisons 5 des paramètres de pilotage provenant de capteurs, d'autres calculateurs, etc ... et qui, à partir desdites consignes électriques de pilotage et desdits paramètres de pilotage, engendre des ordres de commande ;
- des actionneurs 6, qui reçoivent lesdits ordres de commande par des liaisons 7 et qui déplacent en conséquence des gouvernes 8 dudit aéronef, par exemple par rotation autour d'axes X-X ;
- un pilote automatique 9, comportant un calculateur de navigation 9A et un calculateur de pilotage 9B. Le calculateur de navigation 9A reçoit, d'un dispositif 10, des consignes de guidage qui sont affichées par ledit pilote et qui lui sont transmises par des liaisons 11. Il reçoit également des paramètres de guidage que lui adressent des capteurs, d'autres calculateurs, etc ... par des lignes 12. A partir desdites consignes de guidage et desdits paramètres de guidage, le calculateur de navigation 9A élabore des consignes de pilotage automatique, qu'il adresse au calculateur de pilotage 9B par des liaisons 13. Le calculateur de pilotage 9B engendre, à partir de ces consignes de pilotage automatique, des ordres de commande de pilote automatique qu'il adresse aux actionneurs 6, à travers des liaisons 14, pour déplacer lesdites gouvernes 8.

Dans la variante de réalisation 15, également connue et montrée par la figure 2, on retrouve la totalité des éléments 2 à 13 décrits en regard de la figure 1. La seule différence avec l'architecture de cette dernière figure réside en ce que les ordres de commande de pilote automatique, élaborés par le calculateur de pilotage 9B, au lieu d'être adressés directement aux actionneurs 6 par les liaisons 14, le sont indirectement à travers le calculateur de commandes de vol 3. En effet, des liaisons 16 relient les sorties du calculateur de pilotage 9B audit calculateur de commandes de vol 3. Ainsi, ce dernier reçoit du calculateur de pilotage 9B les ordres de commande de pilote automatique, complètement élaborés, et il les transmet, sans les modifier, auxdits actionneurs 6, à travers les liaisons 7. La transmission à travers le calculateur de commandes de vol 3 est passive, et est équivalente à celle effectuée par les lignes 14 de la figure 1.

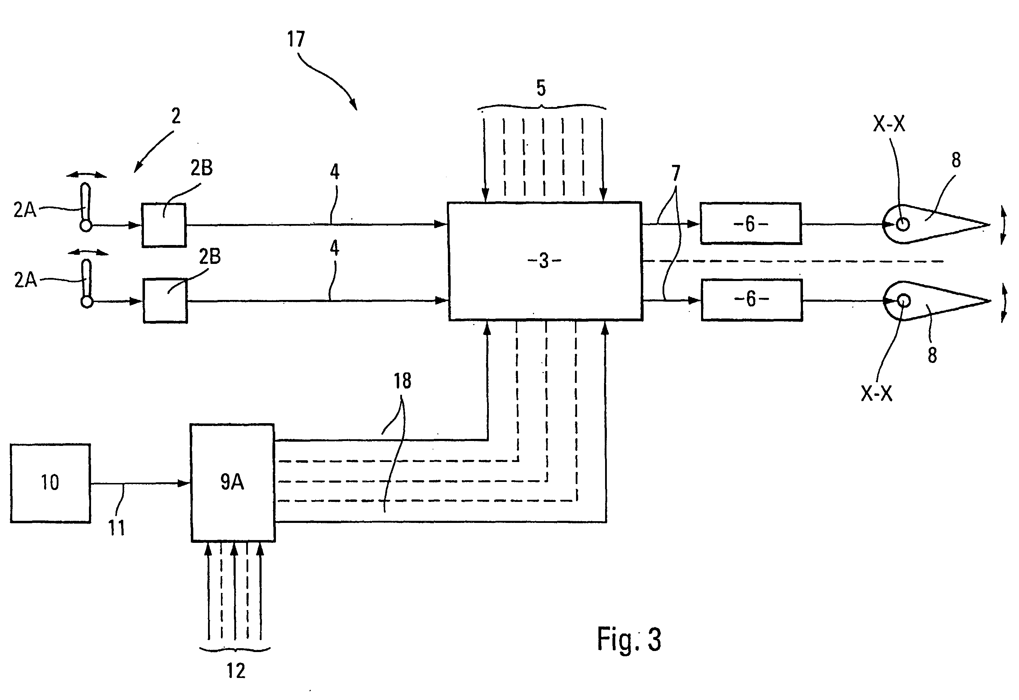

L'architecture 17, conforme à la présente invention et illustrée schématiquement sur la figure 3, comporte la totalité des éléments 2 à 8 et 10 à 12 décrits ci-dessus. En revanche, le calculateur de pilotage 9B et les liaisons associées 13, 14, 16 ont été supprimés.

Dans l'architecture 17, les consignes de pilotage automatique élaborées par le calculateur de navigation 9A sont directement adressées au calculateur de commandes de vol 3 par des liaisons 18. A partir de ces consignes de pilotage automatique, ledit calculateur de commandes de vol 3 élabore, de manière analogue à ce qui passe pour les consignes électriques de pilotage provenant des organes de pilotage 2, des ordres de commande de pilote automatique qu'il adresse aux actionneurs 6 par les liaisons 7.

A partir de consignes de guidage (cap, vitesse verticale, altitude, ...) qui lui sont transmises par le dispositif 10, le calculateur de navigation 9A calcule trois consignes de pilotage automatique, à savoir un facteur de charge vertical commandé, une vitesse de roulis commandée et un dérapage commandé. Ces dernières consignes sont adressées, par les liaisons 16, au calculateur de commandes de vol 3, qui élabore les ordres de braquage automatique pour les gouvernes 8 (gouverne de profondeur, plan, ailerons, gouverne de direction, etc ...).

Par ailleurs, les organes de pilotage 2 (manches, palonniers, etc ...) élaborent des consignes de pilotage homogènes, respectivement, à un facteur de charge vertical commandé, à une vitesse de roulis commandée et à un dérapage commandé. Ces consignes de pilotage sont également adressées audit calculateur de commandes de vol 3, qui élabore les ordres de braquage pour lesdites gouvernes 8.

## Revendications

1. Aéronef à commandes de vol électriques, pourvu de gouvernes (8) aptes à être déplacées par des actionneurs (6) commandés électriquement, ledit aéronef comportant :
- des organes de pilotage (2) et un calculateur de commandes de vol (3), lesdits organes de pilotage (2) étant actionnés par un pilote et engendrant des consignes électriques de pilotage, qui sont adressées audit calculateur de commandes de vol (3), ce dernier calculateur engendrant, à partir desdites consignes électriques de pilotage et de paramètres de pilotage, des ordres de commande adressés auxdits actionneurs (6) pour le déplacement desdites gouvernes (8) ; et
- un pilote automatique
**caractérisé :**
■ **en ce que** ledit pilote automatique exerce exclusivement une fonction de navigation et n'est constitué que par des moyens de calcul (9A) élaborant des consignes de pilotage automatique à partir des consignes de guidage et de paramètres de guidage qui lui sont adressées ;
■ **en ce que** lesdits moyens de calcul (9A) sont directement reliés audit calculateur de commandes de vol (3) pour adresser à ce dernier lesdites consignes de pilotage automatique ; et
■ **en ce que** ledit calculateur de commandes de vol (3) élabore, à partir desdites consignes de pilotage automatique, lesdits ordres de commande de pilote automatique et adresse ces derniers ordres auxdits actionneurs (6) pour qu'ils déplacent en conséquence lesdites gouvernes (8).

2. Aéronef selon la revendication 1,
**caractérisé en ce que** lesdites consignes électriques de pilotage provenant desdits organes de pilotage (2) et lesdites consignes de pilotage automatique provenant desdits moyens de calcul (9A) du pilote automatique sont deux à deux de même nature.

3. Aéronef selon la revendication 2,
**caractérisé :**
- **en ce que** lesdits moyens de calcul (9A) du pilote automatique élaborent, à partir desdites consignes de guidage et desdits paramètres de guidage, trois consignes de pilotage automatique correspondant respectivement à un facteur de charge vertical commandé, à une vitesse de roulis commandée et à un dérapage commandé ; et
- **en ce que** lesdits organes de pilotage (2) engendrent trois consignes électriques de pilotage, respectivement homogènes à un facteur de charge vertical commandé, à une vitesse de roulis commandée et à un dérapage commandé.

## Patentansprüche

1. Flugzeug mit elektrischer Flugsteuerung, versehen mit Steuerflächen (8), die durch elektrisch gesteuerte Stellantriebe (6) verstellt werden können, wobei das Flugzeug umfasst:
- Steuerorgane (2) und einen Flugsteuerungsrechner (3), wobei die Steuerorgane (2) durch einen Piloten betätigt werden und elektrische Steuerungsanweisungen erzeugen, die an den Flugsteuerungsrechner (3) gerichtet werden; dieser letztere Rechner erzeugt ausgehend von den elektrischen Steuerungsanweisungen und Steuerungsparametern an die Stellantriebe (6) zur Verstellung der Steuerflächen (8) gerichtete Steuerbefehle; und
- ein Autopilotsystem,
**dadurch gekennzeichnet:**
- **dass** das besagte Autopilotsystem ausschließlich eine Navigationsfunktion ausübt und nur aus Datenverarbeitungselementen (9A) besteht, die anhand der an ihn gerichteten Lenkbefehle und Lenkparameter Anweisungen zur automatischen Flugsteuerung ausarbeiten;
- **dass** die Datenverarbeitungselemente (9A) direkt mit dem Flugsteuerungsrechner (3) verbunden sind, um an diesen die Anweisungen zur automatischen Flugsteuerung zu richten; und
- **dass** der Flugsteuerungsrechner (3) anhand der Anweisungen zur automatischen Flugsteuerung die Autopilot-Steuerbefehle ausarbeitet und diese Steuerbefehle an die Stellantriebe (6) richtet, damit sie infolgedessen die Steuerflächen (8) verstellen.

2. Flugzeug gemäß Anspruch 1,
**dadurch gekennzeichnet, dass** die von den Steuerorganen (2) stammenden elektrischen Steuerungsanweisungen und die von den Datenverarbeitungselementen (9A) stammenden Anweisungen zur automatischen Flugsteuerung beide von der gleichen Art sind.

3. Flugzeug gemäß Anspruch 2,
**dadurch gekennzeichnet:**
- **dass** die Datenverarbeitungselemente (9A) des Autopilotsystems anhand der Lenkbefehle und der Lenkparameter drei Anweisungen zur automatischen Flugsteuerung ausarbeiten, die jeweils einem gesteuerten vertikalen Lastfaktor, einer gesteuerten Rollgeschwindigkeit und einem gesteuerten Schiebeflug entsprechen; und
- **dass** die Steuerorgane (2) drei elektrische, jeweils einheitliche Steuerungsanweisungen für einen gesteuerten vertikalen Lastfaktor, eine gesteuerte Rollgeschwindigkeit und einen gesteuerten Schiebeflug erzeugen.

## Claims

1. Aircraft with electrical fly-by-wire controls, equipped with control surfaces (8) capable of being moved by electrically operated actuators (6), said aircraft comprising:
- controls (2) and a flight control computer (3), said controls (2) being actuated by a pilot and generating electrical control instructions which are sent to said flight control computer (3), the latter computer generating, from said electrical control instructions and from control parameters, operating commands sent to said actuators (6) to move said control surfaces (8); and
- an autopilot,
**characterized:**
- **in that** said autopilot exclusively exerts a navigation function and only consists of calculation means (9A) producing autopilot instructions from the guidance instructions and guidance parameters sent to it;
- **in that** said calculation means (9A) are connected directly to said flight control computer (3) so as to send said autopilot instructions to the latter; and
- **in that** said flight control computer (3), from said autopilot instructions, produces said autopilot operating commands and sends these commands to said actuators (6) to cause them to move said control surfaces (8) accordingly.

2. Aircraft according to Claim 1, **characterized in that** said electrical control instructions from said controls (2) and said autopilot instructions from said calculation means (9A) of the autopilot are, by pairs, of the same nature.

3. Aircraft according to Claim 2,
**characterized:**
- **in that** said calculation means (9A) of the autopilot produce, from said guidance instructions and said guidance parameters, three autopilot instructions which correspond respectively to a commanded vertical load factor, to a commanded roll rate and to a commanded yaw; and
- **in that** said controls (2) generate three electrical control instructions which are respectively consistent with a commanded vertical load factor, with a commanded roll rate and with a commanded yaw.
